# EUROPEAN PATENT APPLICATION

(11) **EP 0 673 045 A1**
(43) Date of publication of application: **20.09.1995**
(21) Application number: 95301606.0
(22) Date of filing: 10.03.1995
(51) Int. Cl.: H01G 4/18, H01G 4/20

(54) **Foils for a multilayer capacitor**

(30) Priority: 11.03.1994 GB 9404675
(71) Applicant: DOW CORNING S.A., B-7180 Seneffe (BE)
(72) Inventor: Mollie, Jean-Paul, B-8510 Kortrijk (BE)
(74) Representative: Bullows, Michael

(57) **Abstract**

A foil comprising an electrically conductive layer (2) and a layer of cured silicone (1) bonded to at least a part of one of its surfaces, which may be used to make a capacitor with high capacitance. The foil may comprise a support layer (3) of polystyrene or polyester. In one preferred embodiment the support layer (3) is first metallised and a curable silicone composition (1) applied to the electrically conductive layer from edge to edge.

A process of forming a capacitor is described which comprises the steps of assembling two foils (10,11) according to the invention one upon the other with the electrically conductive layers (2) not in contact with each other and with the electrically conductive layer (2) of one foil (10) displaced widthwise or inverse from that of the other (11), winding the assembly tightly upon itself and cutting the foils when the desired capacity has been achieved.

## Description

This invention is concerned with foils and their manufacture and particularly with foils intended for use in capacitors.

High capacitance, low leakage and small size are difficult parameters to obtain in capacitors. Multilayer ceramic capacitors are often used for high voltage applications. They have lower effective series resistance and series inductance and much lower leakage currents than other, single layer, capacitors. However, in situations that impose large operating-temperature fluctuations, vibration and mechanical shock, they can exhibit defective solder joints and electrical connections. A more economical approach for high voltage capacitors is a foil capacitor wherein metallised plastic dielectric film is used. The film units have a self-healing property that reduces short circuits. Some metallised polyester capacitors are as small as the multilayer ceramic capacitors. For example some surface mountable capacitors measure about 7 x 5.2 x 3mm.

The use of silicone fluid in foil capacitors is disclosed in GB 804 842 and US 2,978,098; aluminium foil is coated with silicone oil by immersing a tightly wound roll of foil in a solution of silicone. In such applications silicone fluids play the role of lubricant.

Silicone fluids have also been proposed for use as coating on a metallised surface of a foil capacitor to insulate it against moisture. It is also used to exclude air entrapments in the dielectric and reduces the consequent loss in dielectric constant.

Another disadvantage of the presence of air in a dielectric is the corona effect or the luminous discharge appearing round the surface of the conductor due to ionization of the air by a too high voltage gradient.

US 3,855,507 describes a capacitor comprising a dielectric layer consisting of one thin film of solid or plastic insulating material and metal layers adjacent to a dielectric layer. A carrier layer is located outside the electric field space of the capacitor and does not form part of the capacitor dielectric.

It is one object of the present invention to provide an improved foil suitable for use in capacitors. It is another object of the present invention to provide a method of producing an improved capacitor.

The invention provides in one of its aspects a foil comprising an electrically conductive layer and a dielectric layer characterised in that the dielectric layer comprises a homogeneous layer of a silicone rubber adherent to the electrically conductive layer formed by applying a uniform layer of a liquid curable silicone composition to the electrically conductive layer across the whole surface of one side thereof and over the thickness thereof at one edge thereof and curing the composition to form the layer of silicone rubber.

In a foil according to the invention the layer of cured silicone is bonded to one surface of the electrically conductive layer. If desired the other surface of the electrically conductive layer may be bonded to another layer of the same or a different cured silicone or to a support layer. In a foil according to the invention, preferably the support layer, when used, is of polystyrene or polyester having a mechanical strength and a modulus of elasticity sufficiently high to resist a winding process.

In one preferred embodiment of the invention, the other surface of the electrically conductive layer is bonded to a support layer which is of greater width than the electrically conductive layer, one edge of each of the electrically conductive layer and the support layer being in register and the others not in register.

In another preferred embodiment of the invention the cured silicone extends across the whole of both surfaces and one edge of the electrically conductive layer, the other edge surface of the electrically conductive layer remaining exposed.

In a foil according to the invention the layer of cured silicone is preferably formed by use of an addition cured elastomer which affords high cure rate, high temperature resistance and absence of shrinkage during cure. Preferred materials may be made by bringing about chemical reaction between a linear or branched alkenyl-containing polyorganosiloxane (preferably having at least 0.1% by weight of alkenyl groups) made up, for example, of repeating units of diorganosiloxane, monoorganosilses-quioxane units and triorganosiloxy units, a silicon-bonded hydrogen containing polysiloxane (preferably having at least 0.5% by weight silicon-bonded hydrogen atoms) made up of alkylhydrogensiloxane units and di- or tri-organosiloxane units, a noble metal catalyst and preferably a heat stability additive for example a zirconium- or titanium- containing methyl polysiloxane. The alkenyl groups of the siloxane units may be, for example vinyl or allyl. The organo group of the siloxane units may be hydrocarbon e.g. methyl, ethyl, propyl, isopropyl, butyl, octyl or phenyl groups or monovalent halogenated hydro-ocarbon groups. The noble metal catalyst may be for example a rhodium or platinum containing material. Platinum catalysts may take any of the known forms, ranging from platinum as deposited on carriers such as silica gel or powdered charcoal to platinic chloride, salts of platinum and chloroplatinic acids. A preferred form of platinum is chloroplatinic acid either as the commonly obtainable hexahydrate or the anhydrous form, on account of its easy dispersibility in organosilicon systems and its non-effect on colour of the mixture. Platinum complexes may also be used e.g. those prepared from chloro platinic acid hexahydrate and divinyl tetramethyldisiloxane. Compositions according to the invention cure very rapidly when the component parts have been mixed together and applied on the foil. If it is desired to delay the cure, one may include in the composition one of the known platinum catalyst inhibitors such as polymethylvinylsiloxane cyclic compound or an acetylenic alcohol.

The layer of cured silicone may be formed by application of the chosen curable silicone composition to one or both surfaces of the electrically conductive layer by any suitable means, followed by curing the composition in situ. For example, the curable composition may be applied by spraying or dipping a moving web comprising the electrically conductive layer (with or without an accompanying support layer) with the composition, thus providing a liquid film on the surface of the foil. Thickness of the resultant film can be varied in several ways. The use of a higher transfer speed of the electrically conductive layer through the dipping bath or the spraying station, as well as the use of a low viscosity addition cured elastomer, are conducive to a production of thin silicone liquid film. When preparing a foil according to the invention intended for use in production of a capacitor, it is essential that the silicone elastomer liquid film covers in a continuous and unbroken manner a desired portion of the electrically conductive layer.

Cure of the silicone liquid film may start at room temperature but is preferably accelerated by heating, for example by passing the liquid film through a heating zone. The temperature in the heating zone is adjusted to correspond to the cure temperature and is preferably between 60 to 150°C and is adjusted to cure the silicone elastomer so as to form a cohesive, impermeable layer bonded to the electrically conductive layer.

A foil according to the invention may be wound with another or others, with or without an interposed support layer, for use in a foil capacitor having ability to maintain a high capacitance due to direct adhesion of the cured silicone to the electrically conductive layer and reduction of spurious air entrapment and corona discharge.

The invention provides in another of its aspects a process of forming a capacitor which comprises the steps of assembling two foils according to the invention one upon the other with the electrically conductive layers not in contact with each other and with the electrically conductive layer of one foil displaced or inverse from that of the other, winding the assembly tightly upon itself and cutting the foils when the desired capacity has been achieved.

In a process according to the invention the capacitor may be completed by applying an electrically conductive cap to the exposed edge surfaces of the foils.

In order that the invention may become more clear there now follows a description to be read with the accompanying drawings of two foils according to the invention and two capacitor devices and processes for making them each of which is illustrative of the invention.

In the drawings,
Figure 1 is a schematic sectional diagram of a portion of the first capacitor device, and
Figure 2 is a schematic sectional diagram of a portion of the second capacitor device.

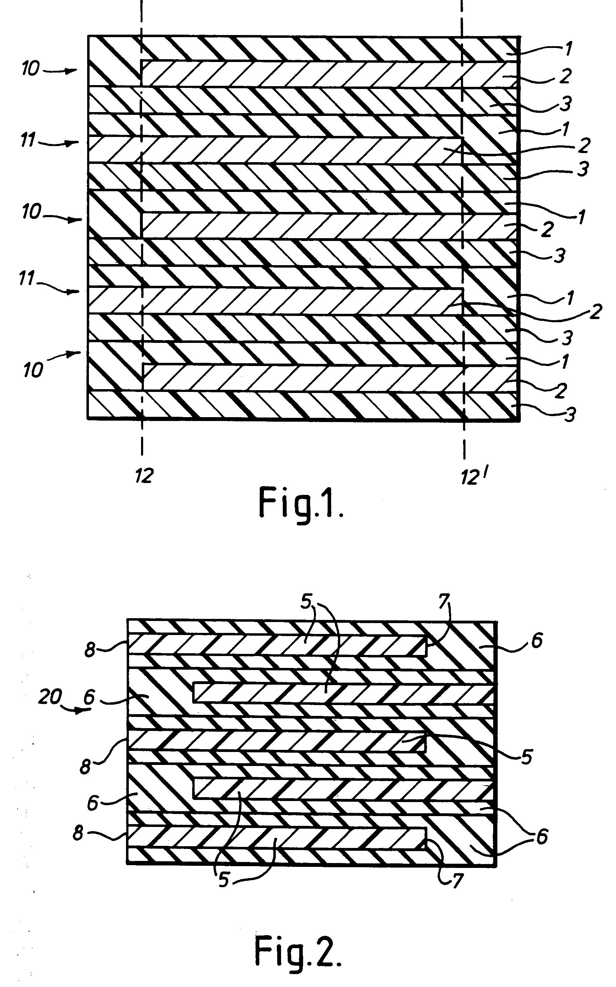

The first capacitor device is formed from illustrative foils (10) and (11). Each foil (10) and (11) comprises an electrically conductive layer in the form of a metallised coating layer (2), a cured silicone coating layer (1) and a support layer (3). The support layer (3) is 6 to 20 microns thick and made of polystyrene or polyester. The metallised coating layer (2) is applied on the support layer (3) and covers a part of one surface of the support layer. In the foil (10) the metallised coating layer extends from the right hand edge (as viewed in Figure 1) across the surface of the support layer (3) to a line 12 positioned parallel to, and adjacent to, but spaced from the left hand edge of the support layer (3). In the foil (11) the metallised coating layer extends from the left hand edge (as viewed in Figure 1) across the surface of the support layer (3) to a line 12' positioned parallel to, and adjacent to, but spaced from the right hand edge of the support layer (3). The cured silicone coating layer (1) of each foil (10), (11) covers the whole surface of the metallic coating layer and the remaining part of the support layer (3) between the line (12) or (12') and the respective adjacent edge of the support layer. The outer surface of the coating layer (1) is parallel to the surface of the support layer (3).

As can be seen from Figure 1 the layer of cured silicone (1) is bonded to one surface of the electrically conductive layer (2) and the other surface of the electrically conductive layer (2) is bonded to the support layer (3) which is of greater width than the electrically conductive layer (2), one edge of each of the electrically conductive layer and the support layer being in register and the other edges not in register.

The silicone composition employed comprised a liquid mixture comprising a linear vinyl-containing polyorganosiloxane having at least 0.1% by weight of vinyl groups, a silicon-bonded hydrogen containing polysiloxane having at least 0.5% by weight silicon-bonded hydrogen atoms comprising methylhydrogensiloxane units and a platinum catalyst. The composition was applied by spraying to form a liquid film and was cured by passing the foil through an oven.

The second capacitor comprises illustrative foil (20 in Figure 2) which comprises an electrically conductive layer provided by a metallised carrier film (5) 6 to 50 microns thick and of aluminium. On both sides of the carrier film (5) is applied and cured a layer (6) of the silicone composition referred to above. The layer (6) covers both sides and one edge (7) of the metallised carrier film (5), the other edge (8) being exposed. The outer surfaces of the silicone layer are generally parallel to each other.

The first illustrative capacitor (Figure 1) is made of a pair of the illustrative foils (10) and (11) by a process including the steps of assembling the two foils one upon the other with the electrically conductive layers not in contact with each other and with the electrically conductive layer of one foil displaced or inverse to that of the other, winding the assembly tightly upon itself and cutting the foils when the desired capacity has been achieved. The metallised layer (2) of the foil (10) extends to the right edge (as viewed in Figure 1) but does metallised layer of foil (11) extends to the left edge (as viewed in Figure 1) but does not extend to the right edge of the foil (11).

The second illustrative capacitor (Figure 2) is made of a pair of foils (20) by a process including the steps of assembling the two foils one upon the other with the electrically conductive layers (5) not in contact with each other and with the electrically conductive layer of one foil inverse to the other, winding the assembly tightly upon itself and cutting the foils when the desired capacity has been achieved. The uncovered metallised edge (8) of the foils is orientated alternately on the right or on the left of the capacitor to be end contacted by a metal layer extending to a first end of the capacitor but not to the second end.

The capacitors may be completed by providing metal capping layers in contact with the exposed edges of the metallised layers.

## Claims

1. A foil comprising an electrically conductive layer and a dielectric layer characterised in that the dielectric layer comprises a homogeneous layer of a silicone rubber adherent to the electrically conductive layer formed by applying a uniform layer of a liquid curable silicone composition to the electrically conductive layer across the whole surface of one side thereof and over the thickness thereof at one edge thereof and curing the composition to form the layer of silicone rubber.

2. A foil according to Claim 1 wherein the curable silicone composition comprises an alkenyl containing polysiloxane, a silicon-bonded hydrogen containing polysiloxane and a noble metal catalyst.

3. A foil according to Claim 1 wherein the layer of cured silicone is bonded to one surface of the electrically conductive layer and the other surface of the electrically conductive layer is bonded to a support layer which is of greater width than the electrically conductive layer, one edge of each of the electrically conductive layer and the support layer being in register and the other edges not in register.

4. A foil according to Claim 2 wherein the support layer is of polystyrene or polyester.

5. A process of forming a capacitor which comprises the steps of assembling two foils according to any one of the preceding claims one upon the other with the electrically conductive layers not in contact with each other and with the electrically conductive layer of one foil displaced widthwise or inverse from that of the other, winding the assembly tightly upon itself and cutting the foils when the desired capacity has been achieved.
